**Europäisches Patentamt**

**European Patent Office**

**Office européen des brevets**

(19)

(11) Veröffentlichungsnummer: **0 116 817**

**A1**

(12) # EUROPÄISCHE PATENTANMELDUNG

(21) Anmeldenummer: 83870042.5

(22) Anmeldetag: 08.04.83

(51) Int. Cl.³: **B 60 P 3/34**

(30) Priorität: 28.04.82 BE 207949
22.02.83 BE 210164

(43) Veröffentlichungstag der Anmeldung:
29.08.84 Patentblatt 84/35

(84) Benannte Vertragsstaaten:
AT BE CH DE FR GB IT LI LU NL SE

(71) Anmelder: Minner, Petrus Jozef
Keierbergstraat 15
B-1760 Roosdaal(BE)

(72) Erfinder: Minner, Petrus Jozef
Keierbergstraat 15
B-1760 Roosdaal(BE)

(54) **Auf einem Fahrzeug montierbare Campingeinrichtung.**

(57) Die Freizeitwohnzelle (10) wird mobil oder verbunden mit einer Ladefläche auf motorisierte oder nicht motorisierte Fahrzeuge gestellt. Die Zelle (10) hat zwei offene Seitenwände (34,35), in die jeweils ein Vorbau eingesetzt werden kann. Der Vorbau hängt an einem Scharnier fest oder läßt sich aushaken und kann durch Ausschwingen der Seitenwände gebildet werden. Die Wohnzelle kann auch gebildet werden durch den Laderum von Lieferwagen. Alle Wohnzellen weisen offene Wände auf. Eine Wohnzelle aus Stangenprofil kann auf dem Gepäcktäger eines PKW oder auf der Ladefläche eines offenen Fahrzeuges befördert werden. Die Vorbauten können horizontal auswärts schwingen, bzw. sich öffnen, so daß zusätzlicher Wohnraum erhalten wird. Die Vorbauten können auch mit einem Zelt überzogen werden. Die mit dem Zelt überzogenen Vorbauten können von der Wohnzelle gelöst und somit vom Fahrzeug abgenommen werden.

fig. 1

EP 0 116 817 A1

Schaukelcaravan mit verstellbaren (vergrössbaren) Flanken

Besteht aus einer autonomen Wohnzelle, mobil oder mit
Befestigungsmöglichkeit auf ja denn nicht motorisierte Fahrzeuge oder deren Ladefläche.
Diese Wohzelle kann ebenfalls eine umgebaute Ladezelle von
Lieferwagen, Personenkraftwagen (mit Koffer), Wohnmobilen,
Schiffskajüten sein.
Bei allen Modellen sind die Wände dieser Zelle offen, und
enthalten eine angemessene Schaukelflanke.
Eine Wohnzelle aus Rohrprofil ist vorgesehen. Diese Wohnzelle
wird oben auf dem Gepäckträger befördert, und kann auf das
Fahrgestell montiert werden.
Transportfähige Wohnzellen aus Polyester oder einem anderen
harten Material, und zu Wohnzelle umgebaute Lieferwagen,
Personenkraftwagen usw. werden am Campingplatz als leichte
Wohnmobile verwendet.

Vergrössbare Wohnzellen oder auf Gepäckträgern von PKW's
beförderte Zellen, sind mir nicht bekannt.

Die existierenden Boxen sind jedoch nicht breiter als die
Fahrzeuge. Etwas zu schmall fürs bequeme Wohnen.
Hier aber hilft Ihnen unsere Erfindung.

Wie bekannt sind Faltcaravans im Verkehr klein und am Campingplatz geräumig.  Das gilt in grossem Masse für den Schaukelcaravan, der/5 x das Volumen der Basiszelle misst.
Im Verkehr sieht das Ganze klein aus, und passt in jeder
Garage.: Hochbau ist also überflüssig. Die kleinen Abmessungen
sind sicherer und benzinersparend.
Der Schaukelcaravan bietet mehrere Einsatzmöglichkeiten.
Das Fahrzeug kann auch unabhängig benutzt werden, wenn die
Schaukelflanke abgekuppelt ist, gestützt und weiter mit dem
Zelt überzogen wird. Eine mobile Wohnzelle aus Rohrprofil oder
einem anderen Material ist ebenfalls vorgesehen.
Dessen Gerippe wird mit dem PKW-Gepäckträger befördert oder
auf dem Pick-up des Wagenbodens.

Am Campingplatz werden die Seitenwände über ein Hakengelenk
mit der Schaukelflanke gefüllt. Falls notwendig, kann man
die Höhe der Wohzelle regeln, indem man die Trennwände über
die Stützpünkte hinaus wegnimmt.

Wir beabsichtigen diese Erfindung zum Vorbild zu stellen.
Dieses Vorbild tut den anderen Modellen und Verwendungsmöglichkeiten der Schaukelflanke –samt der gewählten Wohnzelle –
keinen Eintrag.

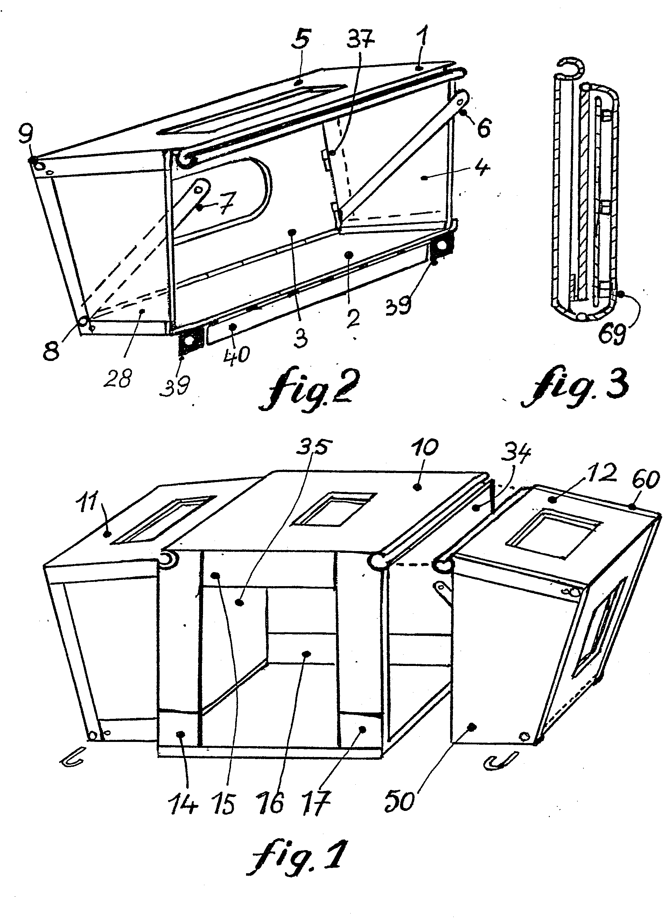

Figur 1    Perspektivisches Bild einer mit Schaukelflanken
           ausgestatteter Wohnzelle.
Figur 2    Perspektivisches Bild der Schaukelflanke.
Figur 3    Schematisches Bild einer zugefalteten Schaukelflanke.
Figur 4    Waagerecht gefaltet zum Hinüberschieben des Zeltes.

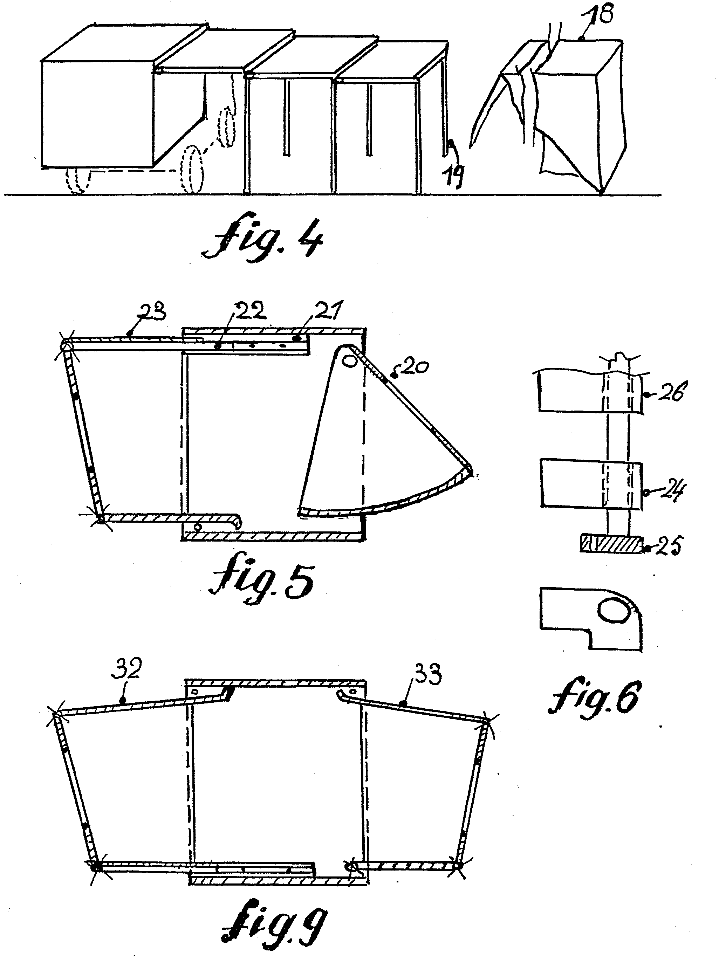

Figur 5    Zwei Varianten zur Schaukelflanke.

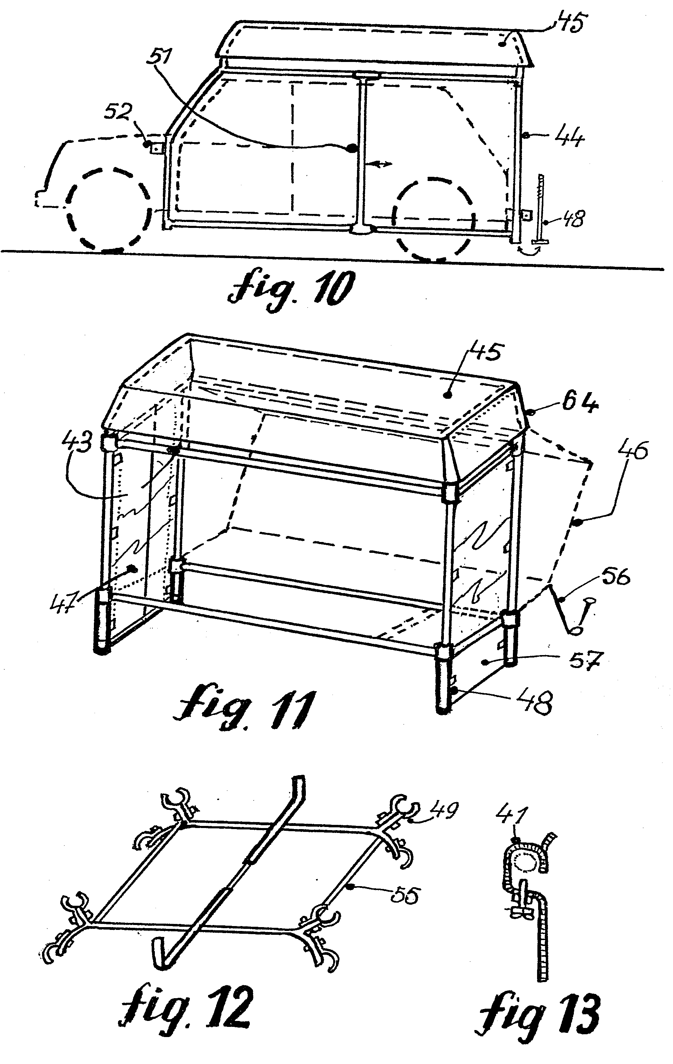

Figur 6   Trennwand mit Stützpunkt und Wohnzellteil.
Figur 9    Vorstellung wie die Schaukelflanken umgekehrt dieselbe Leistung erfüllen in der Wohnzelle.
Figur 10   Wohnzellgeripp für Beförderung auf PKW.
Figur 11   Wohnzellgeripp für Beförderung auf Pick-Up
           (= kleiner Lieferwagen mit offener Lademulde)
Figur 12   Gepäckträger für PKW.
Figur 13   Durchschnitt eines Gelenkmodells für Befestigung
           der Schaukelflanke an die Wohnzelle.

Die Abbildungen zeigen einen Schaukelcaravan mit vergrössbaren
Flanken. Wird aus der Wohnzelle (10) aufgebaut, und wird auf
die Ladefläche der ja denn nicht motorisierten Fahrzeuge gestellt,
sogar auf Gepäckträger von Personenkraftwagen (55).
Die Wohnzelle wie (10) kann genauso gut die Ladefläche sein
von Lieferwagen, Personenkraftwagen (mit Koffer), Wohnmobilen.
Genau wie die mobile Wohnzelle zeigt sie offene Seitenwände
(34) (35), jede mit zugehöriger Schaukelflanke. Die zusammengefaltete Schaukelflanke schwingt man mit dem Dach horizontal,
dann entfaltet man Boden (2), Rücken (3), Seitenwände (4) und
(5), oder (50), (60) und (40). So entsteht ein Zusatzwohnraum,
der in Verbindung steht mit der Wohnzelle (10). Hakenlatten halten
die Schaukel fest.

Die Schaukelflanke kann Stück für Stück abgebaut werden durch
ausziehbare Achsen, die sich in den durchlaufenden (8) (9)
und in den zwei kürzeren Gelenken (37) befinden. Zwei halbe
Elemente, ein negatives und ein positives Element, mitgeformt
mit den Dachrändern (I) (II) und (12), passen ineinander.
Auch das Hakengelenk, das sich über das Wellenrohr dreht, ist in
allen Wohnzellen verwendbar. Die stangförmigen Wohnzellen haben
ein solides Dach (45), das zur Lagerung von Material (oben und
unten) dient. Weiter haben die stangförmigen Wohnzellen eine
Wand mit Tür (47), Schaukelstange (43), Höhestange (48), Seitenwand (57) – ausschiebbar –, Befestigungshaken (52), verschiebbare
Rahmenstange (51), fiktive Schaukelflanke (46), Klemmschraube
(49), PKW-Gepäckträger (55), Spannkabel (56), Wand (57), ausziehbare Zwischenwände (14) (15) (16) (17), Stützplatte der
Zwischenwände (25), auswärts ein- und ausschiebbare Seitenplatte
(50) (60).
Die vorliegende Erfindung beschränkt sich keineswegs zu den im
Text beschriebenen und in den Figuren vorgestellten Modellen.
Im Gegenteil, ein ähnlicher Caravan lässt sich in allerlei
Modellen und Abmessungen verwirklichen. Stets im Rahmen der
Erfindung werden die Fahrzeuge angepasst.

ANSPRÜCHE

1 Schaukelcaravan mit verstellbaren (vergrössbaren) Flanken.
Ist eine Wohnzelle (10), die auf die Ladefläche eines offenen
Fahrzeuges gestellt wird. Kennzeichnet sich durch die zwei
offene Seitenwände (34) (35), in denen jeweils eine Schaukelflanke (11) (12) mit Scharnier festgesetzt oder eingehakt ist.

2. Schaukelcaravan mit verstellbaren (vergrössbaren) Flanken.
Nach dem Umbau Lieferwagen-Bus-PKW (mit Koffer)-Wohnmobil-
Wohnwagen, kennzeichnet sich nach Anspruch 1 das Modell durch
die Ladezelle oder den Wohnraum mit den offenen Seitenwänden
und Schaukelflanken.

3 Schaukelcaravan mit verstellbaren (vergrössbaren) Flanken.
Bildet nach den Ansprüchen 1 und 2 die komplette Schaukelflanke. Die Flanken lassen sich über die Scharniere falten,
auseinanderhaken und demontieren.

4. Schaukelcaravan mit verstellbaren (vergrössbaren) Flanken.
0116817
Wird mit dem Zelt überzogen und kennzeichnet sich durch zwei oder mehrere Stützstangen und eine Schaukelflanke, die zwei horizontale Stütze haben kann.

5. Schaukelcaravan mit verstellbaren (vergrössbaren) Flanken. Typisch für dieses Modell ist, dass es nach Anspruch I die Höhe zwischen den Trennwänden (14) (15) (16) (17) und deren Stützpunkte regelt.

6. Schaukelcaravan mit verstellbaren (vergrössbaren) Flanken. Kennzeichnet sich nach den Ansprüchen 1-2-3 dadurch, dass die Wohnzelle aus einer ja denn nicht runden Stangenform ist aufgebaut (44), und in dieser Weise auf den Gepäckträger eines PKW's oder anderen Wagens mitbefördert wird.

7. Schaukelcaravan mit verstellbaren (vergrössbaren) Flanken. Charakteristisch für dieses Modell ist, dass es sich nach den Ansprüchen 1-2-3-6 über die Eckenstangen auseinanderschrauben lässt. Ausserdem kann man in den offenen Seitenwänden (1 bis 4) jeweils eine Schaukelflanke oder deren Einzelteile 1 und 3 an die Wohnzelle befestigen.

8. Schaukelcaravan mit verstellbaren (vergrössbaren) Flanken. Die Schaukelflanken sind in mehreren Modellen erhältlich. Eins ist einteilig (20).

9. Schaukelcaravan mit verstellbaren (vergrössbaren) Flanken. Eine andere Variante zur Schaukelflanke ist jene mit ausschiebbarem Oberteil. Kennzeichnet sich durch die Ausschieblatte, Ausschiebhülse und Abdach (21) (22) (23).

10 Schaukelcaravan mit verstellbaren (vergrössbaren) Flanken. Die meisten Schaukelflanken erfüllen in umgekehrtem Stand dieselbe Leistung in der Wohnzelle, gemäss den Ansprüchen 1,2,3 (siehe auch 32, 33), und dieselbe Leistung wie andere, angemessene Schaukelflanken.

11 Schaukelcaravan mit verstellbaren (vergrössbaren) Flanken. Typisch für dieses Modell ist, dass nach Anspruch 1 und den anderen Ansprüchen, die Wohnzellen und Schaukeln aus hartem Material hergestellt sind.

12 Schaukelcaravan mit verstellbaren (vergrössbaren) Flanken. Charakteristisch für dieses Modell ist, dass es mit Türen, Türöffnungen und Fenstern in der Wohnzelle und mit Schaukelflankflächen vorgesehen ist.

13 Schaukelcaravan mit verstellbaren (vergrössbaren) Flanken.
Die Seitenwände 50-60 dichten von aussen die Seitenöffnung
ab, und sind nach den Ansprüchen 1-2-3 und anderen autonom,
passen jedoch zu der Schaukelflanke.

fig.2

fig.3

fig.1

*fig. 4*

*fig. 5*

*fig. 6*

*fig. 9*

0116817

fig. 10

fig. 11

fig. 12

fig 13

**Europäisches Patentamt**

**EUROPÄISCHER RECHERCHENBERICHT**

0116817
Nummer der Anmeldung

## EINSCHLÄGIGE DOKUMENTE

EP 83870042.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US - A - 2 710 977 (FANNIN) <br><br> * Fig. 1-8 * <br><br> -- | 1-3,6, 7,11,12 | B 60 P 3/34 |
| X | AU - A - 14 643/70 (RUDGE) <br><br> * Fig. 3,4 * <br><br> -- | 1-4,6, 7 | |
| X | US - A - 3 677 600 (CHARRON) <br><br> * Fig. 1,3,6 * <br><br> -- | 1,2,9, 11,12 | |
| X | US - A - 3 598 441 (DAMIANI) <br><br> * Fig. 2,3 * <br><br> -- | 1,2,11 | |
| X | US - A - 4 057 284 (BLANK) <br><br> * Fig. 1,4-6 * <br><br> -- | 1,2,11, 12 | RECHERCHIERTE SACHGEBIETE (Int. Cl. 3) |
| X | DE - A - 1 964 774 (ZSCHERNITZ) <br><br> * Ansprüche 1,6 * <br><br> -- | 1,2,8, 11,13 | A 45 F 1/00 <br> B 60 P 3/00 <br> B 63 B 29/00 |
| X | DE - A1 - 2 951 016 (ESPEJO) <br><br> * Fig. 3,6 * <br><br> -- | 1,3 | |
| X | CH - A5 - 567 386 (BASARABA) <br><br> * Fig. 3 * <br><br> -- | 1,6 | |
| X | US - A - 2 788 238 (BAIRD) <br><br> * Fig. 5,6 * <br><br> -- | 1,12 | |

Der vorliegende Recherchenbericht wurde für alle Patentansprüche erstellt.

| Recherchenort | Abschlußdatum der Recherche | Prüfer |
|---|---|---|
| WIEN | 06-07-1983 | KAMMERER |

Europäisches
Patentamt

**EUROPÄISCHER RECHERCHENBERICHT**

**0116817**
Nummer der Anmeldung

EP 83870042.5

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe. soweit erforderlich. der Maßgeblichen Teile | betrifft Anspruch | |
| X | US - A - 3 097 400 (DAVIS)<br>* Fig. 1,3 *<br>-- | 1,3,7, 12 | |
| X | US - A - 3 194 251 (PETTERSEN)<br>* Fig. 1 *<br>-- | 1 | |
| X | US - A - 3 861 572 (NORRIS)<br>* Fig. 10 *<br>-- | 1 | |
| X | FR - A - 1 256 580 (JULIOT)<br>* Fig. 1 *<br>-- | 1 | RECHERCHIERTE SACHGEBIETE (Int. Cl.³) |
| X | FR - A1 - 2 381 490 (SAMUYLLO)<br>* Fig. 6,7 *<br>---- | 1 | |